# EUROPEAN PATENT SPECIFICATION

(11) **EP 0 437 779 B1**
(45) Date of publication and mention of the grant of the patent: **04.06.1997**
(21) Application number: 90124782.5
(22) Date of filing: 19.12.1990
(51) Int. Cl.: G06F 3/06

(54) **Dat drive/controller interface**
DAT-Antriebs/Steuerungs-Schnittstelle
Interface entre un contrôleur et un lecteur de DAT

(30) Priority: 17.01.1990 US 465726
(43) Date of publication of application: 24.07.1991
(73) Proprietor: Conner Peripherals, Inc., San José California 95134 (US)
(72) Inventor: Campbell, Kenneth C., Orange, California 92669 (US); Richmond, Robert C., Laguna Hills, California 92653 (US)
(74) Representative: Molyneaux, Martyn William

(56) References cited:
- EP-A- 0 173 411
- EP-A- 0 321 077
- EP-A- 0 322 167
- EP-A- 0 323 890

## Description

### BACKGROUND OF THE INVENTION

The disclosed invention is directed generally to computer storage digital audio tape (DAT) drives, and more particularly is directed to an interface between a DAT drive and an associated controller.

Digital audio tape (DAT) technology, which was developed for audio programming as defined in the DAT Conference Standard, DIGITAL AUDIO TAPE RECORDER, June 1987, published by the Electronic Industries Association of Japan, has been adapted for storage of computer data. An example of a format for the storage of computer data utilizing DAT technology is the American National Standards Institute (ANSI) Digital Data Storage (DDS) standard, presently in draft form ("PROPOSED AMERICAN NATIONAL STANDARD HELICAL-SCAN DIGITAL COMPUTER TAPE CARTRIDGE 381 mm (0.150 in) FOR INFORMATION INTERCHANGE," ASC X3 Project No. 668-D).

The characteristics that have made DAT technology attractive for computer data storage include high capacity, high transfer rate capability, relatively small media size and low media cost, and the adaptability of DAT technology to conform with personal computer storage device form factors including the 5-1/4 and 3-1/2 inch forms.

The use of DAT technology for storage of computer data can be achieved by application of a data storage format, such as the above-referenced ANSI DDS standard, to the DAT Conference audio standard. In particular, the DAT audio standard physical track format is retained, but the contents of the information stored in the tracks is in accordance with the computer data storage format.

DAT technology was developed primarily for audio applications, and therefore an important consideration with the use of DAT technology for computer data storage is the nature of the interface between the DAT drive and the host computer and the requirements of computer data storage.

EP-A-0 321 077 is directed to the writing and overwriting of data in a particular data (DAT) format so as to increase the efficiency of overwriting old data, while at the same time, not decreasing the erase/access time or amount of tape necessary to effect such an erasure operation. This reference is not concerned with the function of control of a controller/drive interface as defined in the claims of the subject application. EP-A-0 322 167 describes a general system architecture for accomplishing data transfer to/from a DAT drive. Again this reference is not directed towards providing control information of read/write formatter circuits. EP-A-0 323 890 is directed to the formation, assembly and organization of data in frames, particulary size groups, transferred to and from a tape drive. This reference discloses the use of a Save Set Marks hierarchy that delimits groups of collections of user records on a tape. The Save Set Marks are used for efficient searching of the contents of the tape.

### SUMMARY OF THE INVENTION

It would therefore be an advantage to provide a computer storage DAT drive controller interface that interfaces with DAT drive having electronic components that were developed for audio applications.

Another advantage would be to provide a computer storage DAT drive controller interface that provides for full and precise capability of controlling the contents of the information written to tape and precise control of tape operation.

A further advantage would be to provide a computer storage DAT drive controller interface that interfaces with a DAT drive having electronic components developed for audio applications and which provides for data frame boundary determination in accordance with computer data storage formats.

According to a first aspect of this invention there is provided a data transfer interface as claimed in claim 1 herein.

According to a second aspect of this invention there is provided a method for transferring computer data as claimed in claim 10 herein.

Thus the foregoing and other advantages are provided by the invention in a DAT drive/controller interface for use with a DAT drive having (a) read/write formatting circuitry for writing data to tape in accordance with the DAT Conference format and for reading from tape data recorded in accordance with the DAT Conference format, (b) a tape drive mechanism, and (c) a drive mechanism control circuit. The interface includes transfer and receive circuits for transferring to the read/write formatting circuitry data to be written to tape and for receiving from the read/write circuitry data read from tape, and drive control means for controlling the drive mechanism control circuit.

### BRIEF DESCRIPTION OF THE DRAWING

The advantages and features of the disclosed invention will readily be appreciated by persons skilled in the art from the following detailed description when read in conjunction with the drawing wherein:

FIG. 1 is a schematic diagram illustrating the different areas on a single track of a DAT system tape.

FIG. 2 is a block diagram of a system with which an interface in accordance with the invention can be utilized.

FIG. 3 is a block diagram illustrating an interface in accordance with the invention.

FIG. 4 is a timing diagram depicting by way of illustrative example certain timing signals and the timing of information transferred in accordance with the interface of FIG. 3.

FIG. 5 is an illustrative example of a format for control information provided to the drive via the interface of FIG. 3.

FIG. 6 is an illustrative example of a format for status information provided by the drive via the interface of FIG. 3.

FIG. 7 is an illustrative example of the format of FIG. 6 as utilized to provide particular information.

FIG. 8 is an illustrative example of the format of FIG. 7 as utilized to provide tape type information.

FIG. 9 is a flow diagram of an example of a process utilized by the interface of FIG. 3 for reading and transferring data from a computer storage DAT system tape, which is helpful in understanding the operation of the interface of FIG. 3.

### DETAILED DESCRIPTION OF THE DISCLOSURE

In the following detailed description and in the several figures of the drawing, like elements are identified with like reference numerals.

By way of illustrative example, the disclosed invention can be implemented generally in accordance with the ANSI DDS standard referenced in the background, and the following is based upon conformation with ANSI DDS. However, it should be readily appreciated by persons skilled in the art from a reading of the subject disclosure that other computer data storage recording formats can be utilized to implement the invention.

For ease of explanation, some aspects of DDS formatting that are pertinent to the invention will be briefly discussed. DDS formatting organizes data into data groups respectively having 22 or 23 frames, where each frame comprises 2 tracks.

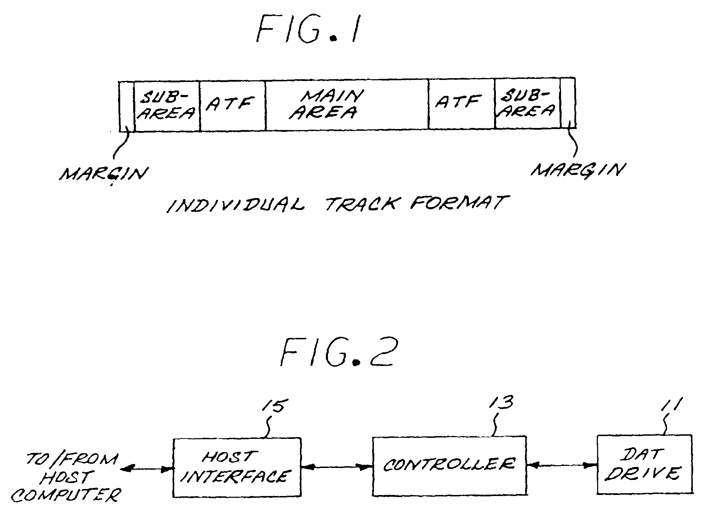

Referring to FIG. 1, set forth therein by way of illustrative example is a schematic layout of one track of a computer data storage DDS DAT tape. A Main Area, which corresponds to the Main area in DAT audio tapes, stores user data as well as data management information such as the Logical Frame Number (LFN) of the frame with which the particular track is associated. The LFN is the logical position of the frame in the associated data group, which can be different from the actual physical location of the frame due to factors such as rewrites. Further, logical frames can be out of sequence because of appends, rewrites, head clogs during write operations, and bad tape areas. DDS formatting supports a read-after-write technique wherein a frame identified as being a bad frame can be re-written downstream of the bad frame, and not necessarily immediately after the bad frame. In particular, the frame can be re-written after zero, one, two, three, four or five other frames have been written. The subject disclosure takes into account such read-after-write procedures without regard to logical frame numbers.

The tape Subareas store, among other information, the LFN of the associated frame, the Absolute Frame Count (AFC) for the associated frame, a subcode type identifier, a tape area identifier, as well as other information. The AFC represents the actual physical location of a frame in the sequence of frames on a tape.

A data group includes 22 or 23 frames, depending on whether a third level of error correction code (ECC) is utilized with the group, and group boundaries can be indicated by amble frames which have an LFN of 0, by the status of a last frame I.D. bit in the frame header and in the subcode, or by a frame that has an LFN of 1. However, with read-after-write, the last frames in one group could be meshed with the initial frames in the subsequent group, and the procedure for reading groups will need to recognize and properly process this circumstance.

The ATF (automatic track finding) areas contain tracking information utilized for centering the tape heads on the tracks on the tape.

Referring now to FIG. 2, shown therein is a generalized block diagram of a computer storage DAT drive system in which the interface of the invention can be implemented. The system 10 includes a DAT drive 11, a controller 13, and a host computer interface 15, and a host computer. The host computer interface can comprise an interface in accordance with the ANSI SCSI standard, or an IBM PC bus compatible interface, for example.

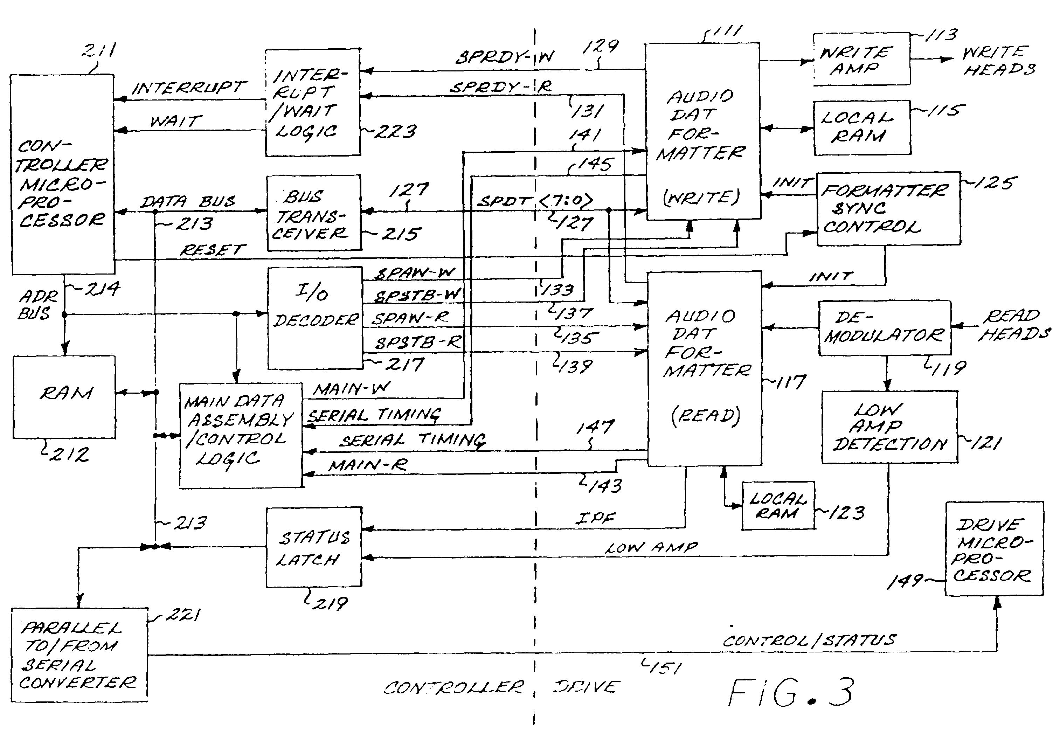

Referring now to FIG. 3, set forth therein are components of the drive 11 and controller 13 that are pertinent to an interface in accordance with the invention. The drive 11 includes a write audio DAT formatter 111 that receives Main Area information and Subarea information from the controller, appropriately formats such information in accordance with the DAT Conference audio standard, and provides the formatted information to a write amplifier 113 which provides recording signals to the write heads of the drive. A local random access memory (RAM) is utilized by the write formatter circuit 111 for storage and processing operations.

Generally, the write formatter circuit 111 assembles the data blocks that are to be recorded in the Main Areas and Subareas of the tape. For example, pursuant to the ANSI DDS standard, the data blocks for both the Main Areas and the Subareas are organized substantially identically, with each block having a Sync area, an ID area, an ID parity area, and a data area. The contents of the Main Area data block data areas is sometimes referred to as Main data, while the contents of the Subarea data block data areas is sometimes referred to as Sub data. The information assembled into the data blocks comprises (a) information provided by the controller and (b) information generated or calculated by the formatter.

As to the writing of Subarea data blocks, the controller provides the following information to the write formatter circuit:
(a) the W1 byte for the Sub ID area of each Sub data block:
(b) the lower order 7 bits of the W2 byte for the Sub ID of each Sub data block;
(c) pack data for the data areas of the Sub data blocks;
(d) pack parity bytes for the pack data items.

As to the writing of Subarea data blocks, the write formatter circuit generates or calculates the following information:
(a) the sync bits for the Sync area of each Sub data block;
(b) the ID parity byte for the Sub ID parity area of each Sub data block;
(c) the C1 ECC error correction parity bytes for the Sub data block data areas (in accordance with the DAT Conference audio standard);
(d) the seventh bit of the W2 byte in the Sub ID area of each Sub data block.

As to the writing of Main Area data blocks, the controller provides the following information to the write formatter:
(a) the W1 byte of the Main ID area of each Main data block; and
(b) data for the data areas of the Main data blocks (e.g., user data).

As to writing the Main Area data blocks, the write formatter generates or calculates the following information:
(a) the sync bits for the Sync area of each Main data block;
(b) the ID parity byte for the Main ID parity area of each Main data block;
(c) the C1 ECC and C2 ECC error correction parity bytes for the Main data block data areas (in accordance with the DAT Conference audio standard);
(d) the W2 byte in the Main ID area of each Main data block.

The drive 11 further includes a read audio DAT formatter circuit 117 which receives tape data from a demodulator 119 that is responsive to the outputs of the read heads of the drive. The read formatter circuit decomposes the information read from tape in accordance with the DAT Conference audio standard, so as to provide a Main Area data output to the controller and to store Subarea information in predetermined locations in a local RAM 123 utilized by the read formatter circuit for storage and processing operations.

A low amplitude detection circuit 121 connected to the demodulator 119 provides a low amplitude signal /LOW-AMP indicative of a playback signal envelope amplitude that is below a predetermined level, which indicative of a bad area on the tape.

Generally, the read formatter circuit disassembles the Main and Sub data blocks read from tape, checks ID parity, checks pack parity, checks C1 ECC parity for the Sub area pack data, checks C1 ECC and C2 ECC parity for the Main data, and transmits the ECC processed Main data to the controller, while making other information read from tape available at predetermined locations in the local RAM 123, for example.

As discussed more fully herein, the write Main data (designated ADDAT) provided by the controller for the Main Area data block data areas is communicated to the write formatter circuit via a unidirectional serial line, while the read Main data (designated DADAT) provided by the read formatter circuit to the controller is communicated via another unidirectional serial line. Some error detection information is communicated via dedicated lines, and all other information transferred between the formatter circuits and the controller (designated SPDT data) is communicated via a parallel bus.

In addition to tape data block information, SPDT data includes control information for the formatter circuits, such as sample rate, track pitch, and function (e.g., play, record, high speed). SPDT data also includes read error processing information as accessed by the controller from the read formatter circuit.

The parallel SPDT data is transferred between the write and read formatter circuits 111, 117 and the controller via a parallel SPDT bus 127 that is common to both formatter circuits. Formatter ready signals SPRDY-W and SPRDY-R, which indicate that the formatter providing the signal is ready to receive or send data on the parallel SPDT bus 127, are provided by the formatter circuits on respective lines 129, 131. Address strobe signals SPAW-W and SPAW-R, generated by the controller to transfer address information to the formatter circuits, are provided on respective lines 133, 135 to the formatter circuits 111, 117, respectively. Data strobe signals SPSTB-W and SPSTB-R, generated by the controller to transfer SPDT data to and from the formatter circuits, are provided on respective lines 137, 139 connected to the formatter circuits 111, 117, respectively.

By way of illustrative example, the transfer of SPDT data can be pursuant to memory maps for the local RAMs of the formatter circuits, wherein the address locations of the data identify the nature of the data.

Main data for and from the data areas of the Main Area blocks is transferred between the formatter circuits 111, 117 via respective serial lines 141, 143. In particular, ADDAT data to be written to tape is serially transferred from the controller to the write formatter circuit 111 on the serial line 141, while DADAT data read from tape is transferred from the read formatter circuit 117 to the controller on the serial line 143. Depending upon the tape format specification utilized, the Main Area data transferred to the write formatter circuit for recording can be data as to which error correction parity generation has been performed (e.g., C3 ECC in accordance with the ANSI DDS standard).

For implementation in accordance with the ANSI DDS standard, the ADDAT and DADAT data would be logically organized in groups and frames that include appropriate headers in addition to the user data.

Serial timing signals are provided by the respective formatter circuits via respective timing lines 145, 147 which respectively include a plurality of different timing signals, examples of which will be described in more detail further herein. Generally, such timing signals are synchronized to the rotation of the tape head cylinder, for example by being based on a master signal that controls the rotation of the tape head cylinder, and identify track boundaries, word boundaries, and bit boundaries.

As to the ADDAT and DADAT serial data, the formatter circuits 111, 117 generally function as in an audio DAT application. In particular, the write formatter circuit 111 functions as if it were receiving digital audio data samples from an analog-to-digital converter; and the read formatter circuit 117 functions as if it were providing digital audio data samples to a digital-to-analog converter. Stated another way, the ADDAT data to the write formatter emulates the output of an analog-to-digital converter that could be utilized in an audio application, and the DADAT data from the read formatter circuit emulates the input to a digital-to-analog converter that could be utilized in an audio application.

The read formatter circuit 117 further provides an interpolation flag signal IPF which indicates that C2 ECC parity check of the data read from tape was unable to correct detected errors.

A formatter synchronizing control 125 synchronizes the operation of the write and read formatter circuits 111, 117 pursuant to a RESET signal provided by the controller. As discussed more fully herein, the synchronizing control 125 synchronizes the operation of the formatter circuits to allow for read-after-write with a 4 head implementation of the drive.

The drive 11 further includes a drive microprocessor 149 which receives drive commands and provides status information via drive control/status lines 151. Such drive commands control the operation of the drive, and the status information is indicative of the status of the drive.

The controller 13 includes a microprocessor 211 for controlling the operation of the controller, for assembling the SPDT information transmitted on the parallel bus 127 to the drive, and for processing the SPDT information accessed from the drive on the parallel bus 127. A RAM 212 is coupled to the microprocessor 211 via a parallel data bus 213 and a parallel address bus 214, and is utilized by the controller microprocessor 211 for storage and processing operations.

A bus transceiver 215 coupled to the parallel data bus 213 controls the parallel SPDT bus 127 for transfer of SPDT information. An interrupt/wait logic circuit 223 is responsive to the SPRDY signals and provides interrupt and wait signals to the microprocessor 211 for the processing and transfer of data on the parallel SPDT bus 127, as discussed in more detail herein.

A main area data assembly/control logic circuit 217 which serializes ADDAT data for transfer to the write formatter 111 in the drive 11, and further assembles DADAT data received from the read formatter 117, for example into groups in accordance with the ANSI DDS standard.

Main Area data and Subarea information as well as Main data block ID information are transferred concurrently, although due to processing requirements the Subarea information being transferred at a given time might not be associated with the Main Area data being transferred at that time. Thus, for example, there can be fixed time relation between (a) the transfer of Main Area data (via DADAT or ADDAT) and (b) the transfer or availability of associated Subarea information and Main data block ID information (via the SPDT bus). By way of illustrative example, for recording, the Subarea information and Main data block ID information can be delayed relative to the associated Main Area data by one or two track intervals; and for reading, Main Area data can be delayed relative to the availability of associated Subarea information by one or two track intervals. Other read data such as error counts can also be delayed relative to the availability of Subarea information. A particular illustrative example of the timing of the interface signals between the drive 11 and the controller 13 will be discussed further herein.

A status latch 219 is coupled to the data bus 213 and receives the interpolation flag IPF and the low amplitude signal /LOW-AMP from the drive 11. A parallel/-serial converter 221 coupled to the data bus 213 is utilized to transfer control/status information between the controller and the drive on the drive control/status lines 151.

Drive control information is provided by the controller to control the operation of the drive mechanism, while drive status information is provided by the drive as to the status of the drive. Particular examples of drive control information, drive status information, and formats, and will be discussed further herein.

By way of illustrative example, set forth below is a specification of signals in accordance with the invention between the controller and the drive.

### DRIVE CONTROL/STATUS

### RXD Receive Data From Controller

RXD is used to send commands to the drive. It changes after the high-to-low transition of TRXCLK. Data transfer is MSB first. A command transfer can be initiated by the controller any time /DRDY (discussed below) is asserted.

### TXD Transmit Data To Controller

TXD is used to receive drive status. It changes after the high-to-low transition to RXCLK. Data transfer is MSB first. RXD and TXD data are sent simultaneously and synchronously.

### /TRXCLK Transfer Clock From Controller

On or after the low-to-high transition, TXD and RXD are sampled.

### /DRDY Drive Ready To Controller

Asserted when the drive is ready to transfer a byte via the TXD and RXD lines. Negates after the byte has been transferred. Asserts again when the drive is ready to accept the next command.

### /RESET Drive Reset From Controller

Asserted by the controller to initialize the drive to its starting state. This is a "hard" reset. It also forces resynchronization of the write and read formatter circuits.

### SPDT DATA TRANSFER TO/FROM WRITE FORMATTER CIRCUIT

### SPDT(7:0) SPDT Data Transfer To/From Controller

Two-way tri-state data bus to both write and read formatter circuits. High = 1. Used to transfer I/O. The write formatter circuit is in the high impedance state when not enabled by the /SPSTB-W signal (discussed below).

### SPRDY-W SPDT Data Ready To Controller

Indicates that the transfer of SPDT data to the write formatter circuit possible. In normal write mode, SPRDY-W is negated when R3CP-W changes, and is asserted beginning a short interval thereafter, for example to allow for processing.

SPRDY-W can also negated after the end of an /SPSTB-W pulse (discussed below), for example to allow the write formatter to access its local RAM if the write formatter is relatively slower than the controller microprocessor.

### /SPAW-W SPDT Address Write From Controller

The low-to-high transition causes the I/O address specified by SPDT(7:0) to be written into the write formatter circuit. This address will be used for the next transfer.

### /SPSTB-W SPDT Data Strobe From Controller

The low-to-high transition causes the data on the SPDT bus to be transferred to/from the write formatter circuit. After the SPDT data has been transferred, the write formatter can increment the selected I/O address by 1, which would be utilized as the address of the next transfer if no address is specified for such next transfer.

### SPDT DATA TRANSFER TO/FROM READ FORMATTER CIRCUIT

### SPDT(7:0) SPDT Data Transfer To/From Controller

Two-way tri-state data bus to both write and read formatter circuits. High = 1. Used to transfer I/O. The read formatter circuit is in the high impedance state when not enabled by the /SPSTB-R signal (discussed below).

### SPRDY-R SPDT Data Ready To controller

Indicates that the transfer of SPDT data from the read formatter circuit is possible. In normal read mode, SPRDY-R is negated when R3CP-R changes, and is asserted a short time thereafter, for example to allow for processing.

SPRDY-R is also negated after the end of an /SPSTB-R pulse (discussed below), for example to allow the read formatter to access its local RAM if the read formatter is relatively slower than the controller microprocessor.

### /SPAW-R SPDT Address Write From Controller

The low-to-high transition causes the I/O address specified by SPDT(7:0) to be written into the read formatter circuit. This address will be used for the next /SPSTB-R transfer. After the SPDT data has been transferred, the read formatter can increment the selected I/O address by 1, which would be utilized as the address of the next transfer if no address is specified for such next transfer.

### SERIAL DATA TRANSFER TO WRITE FORMATTER CIRCUIT

### R3CP-W Rotation 30 Hz Clock Period To Controller

30 Hertz clock which is synchronized to the cylinder rotation. The phase is aligned with track write RF transfers. High = track A (left), low - track B (right). The R3CP-W signal is 180 degrees out of phase with the R3CP-R. R3CP-W changes on the high-to-low transition of /ADBCK (discussed below). R3CP-W is always present, even during STOP, UNLOAD, and EJECT modes.

### ADDAT Main Area Write Data From Controller

A continuous serial bit stream of data to be recorded in the Main Area of each track. Data is sent as 16 bit samples synchronized with ADLRCK and /ADBCK. The MSB of each sample is sent first. ADDAT changes on the high-to-low transition of /ADBCK.

### ADLRCK Main Area Write Left/Right Clock To Controller

The Main Area write data word sample clock. High = right channel 16 bit sample, low = left channel 16 bit sample. Changes polarity on high-to-low transitions of every 16th /ADBCK. Goes low when R3CP-W goes high.

### /ADBCK Main Area Write Data Bit Clock To Controller

The Main Area write data bit clock. Data on ADDAT is valid on the low-to-high transition of /ADBCK. R3CP-W, ADLRCK and ADDAT are changed on the high-to-low transition of /ADBCK. /ADBCK runs continuously at 32 times ADLRCK. For a 48 Khz sampling rate, the clock period is 651 nsec.

### /NLOAD-W Load Sample Pulse To Controller

Pulses low for one /ADBCK clock period to indicate the boundary between successive 16-bit Main Area write data words. Changes on the low-to-high transition of /ADBCK.

### SERIAL DATA TRANSFER TO CONTROLLER

### R3CP-R Rotation 30 Hz Clock Period To Controller

30 Hertz clock (during play/record) which is aligned with track read RF transfers. High = track A (left), low = track B (right). The R3CP-R signal is 180 degrees out of phase with the R3CP-W signal. R3CP-R changes on the high-to-low transition of /DABCK. R3CP-R is always present, even during STOP, UNLOAD, and EJECT modes.

### DADAT Main Area Read Data To Controller

A continuous serial bit stream of data from the recorded Main Area of each track. Data is received as 16 bit samples synchronized with DALRCK and DABCK. The MSB of each sample is sent first. R3CP-R changes on the high-to-low transition of /DABCK.

### DALRCK Main Area Read Left/Right Clock To Controller

The Main Area read data sample clock. High = right channel 16 bit sample, low = left channel 16 bit sample. Changes polarity on high-to-low transitions of every 16th /DABCK.

### /DABCK Main Area Read Data Bit Clock To Controller

The Main Area read data bit clock. Data on DADAT is valid on the low-to-high transition of /DABCK. R3CP-R, DALRCK and DADAT are changed on the high-to-low transition of /DABCK. /DABCK runs continuously at 32 times DALRCK. For a 48 Khz sampling rate, the clock period is 651 nsec.

### /NLOAD-R Load Sample Pulse To Controller

Pulses low for one /DABCK clock period to indicate the boundary between successive 16-bit Main Area read data words. Changes on the low-to-high transition of /DABCK.

### IPF Interpolation Flag To Controller

Indicates that the current 16 bit PCM sample, as defined by DALRCK, contains incorrect data (C2 ECC failure). It is a pulse of nominally 1/2 the length of a DALRCK sample, centered within the associated DALRCK.

### /LOW-AMP Low Amplitude To Controller

Asserted whenever the playback signal envelope amplitude drops below 50% of the nominal playback envelope amplitude, as determined by a threshold setting.

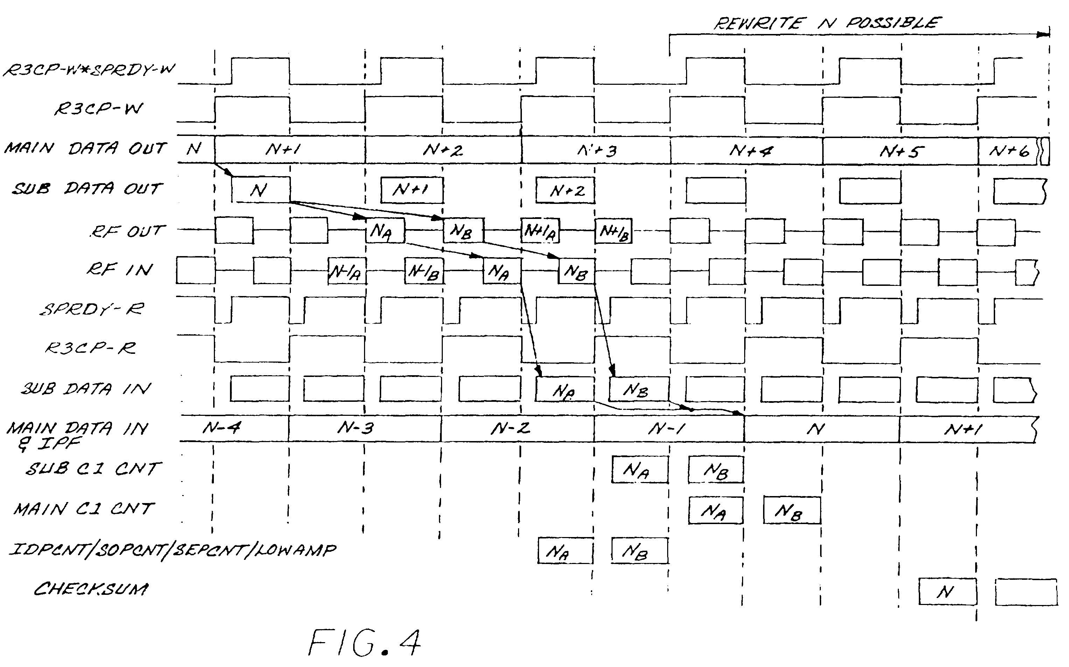

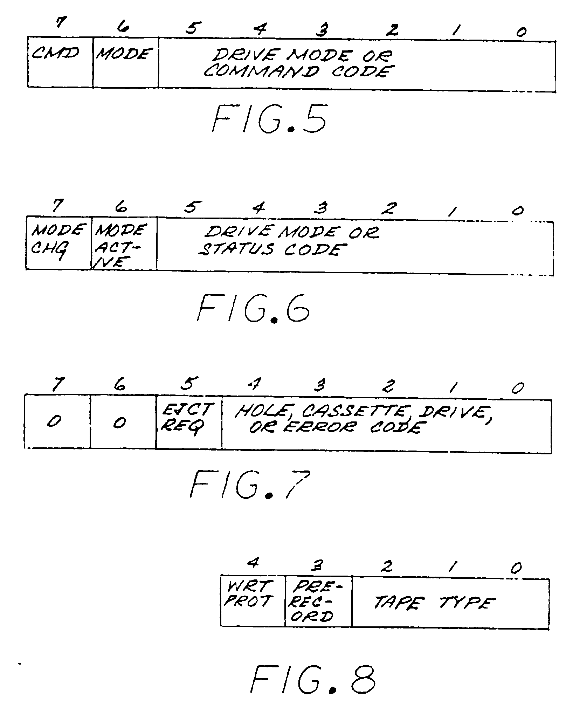

Referring now to FIG. 4, shown therein is a timing diagram which sets forth an illustrative example of the pertinent timing signals discussed above and further depicts the processing of data being written to tape and data being read from tape. The timing diagram of FIG. 4 also includes other signals and information that can be pertinent to a read-after-write procedure which is advantageously implemented in accordance with the invention. While FIG. 4 depicts the concurrent and phase locked operation of the write and read formatter circuits for providing read-after-write, it should be appreciated that write-only and read-only operations can be implemented.

The R3CP-W and R3CP-R signals are synchronized with the rotation of the tape head cylinder, and are phase locked to each other with a 180 degree phase difference. A complete cycle of an R3CP signal represents one revolution of the tape head cylinder.

The ADDAT serial data to be recorded and the DADAT serial data from tape are transferred to and from the drive concurrently, with the frame, track, word and bit boundaries being identified by the transitions of the R3CP signals and the other timing signals discussed above. In particular, during each of the MAIN DATA OUT intervals that are defined by the positive going transitions of the R3CP-W signal, Main Area data for a frame is transferred to the drive. Similarly, during each of the MAIN DATA OUT intervals defined by the positive going transitions of the R3CP-R signal, Main Area data for a frame is transferred to the controller.

While the frame boundaries are indicated by MAIN DATA OUT and MAIN DATA IN as coinciding with the positive transitions of the R3CP-W and R3CP-R signals, the phasing of the frame boundaries can be different, depending on implementation and processing requirements. The important consideration is that frame boundaries be defined by intervals that each equal one cycle of the R3CP signals. For example, the frame boundaries of MAIN DATA OUT can lead the positive transitions of R3CP-W by a predetermined number of bit intervals, and the frame boundaries of MAIN DATA IN can lag the positive transitions of R3CP-R by a predetermined number of bit intervals.

The interpolation flag signal IPF is also provided during the MAIN DATA IN intervals during each word, for example in the middle of the word interval with which the particular IPF signal is associated, as discussed above in the illustrative examples of signal specifications.

SPDT data, including tape Subarea information and Main data block ID information, can be transferred on the SPDT parallel bus during the intervals identified by SUB DATA OUT and SUB DATA IN, wherein OUT refers to transfers the write formatter circuit 111, and IN refers to transfers between the read formatter circuit 117 and the controller. As discussed above, the SPDT data can include control information for the formatter circuits, which would require transfer to the formatter circuits. The reference to SUB DATA in the timing diagram of FIG. 4 is to indicate that Subarea information is to be provided or is available via the SPDT parallel bus during the SUB DATA intervals identified in the timing diagram, with the direction of transfer being indicated by OUT and IN.

The SUB DATA OUT intervals are defined by the logical AND of the R3CP-W signal and the SPRDY-W signal that is not shown but is essentially the same as the SPRDY-R signal, and the SUB DATA IN intervals are defined by the high states of the SPRDY-R signal. The SUB DATA OUT intervals are defined in this manner to provide a single SUB DATA OUT interval for each cycle of the R3CP-W signal, which is appropriate for a tape format in accordance with the ANSI DDS standard that requires that the subareas in both tracks of a frame be identical. However, it should appreciated that two SUB DATA OUT intervals can be provided for each R3CP-W cycle if the two tracks of a frame are to include different Subarea information.

It should be noted that the SUB DATA OUT and SUB DATA IN references indicate when Subarea information and any Main Area information communicated via the SPDT bus are transferred from the controller (OUT) and to the controller (IN).

The direction of transfer of SPDT data on the SPDT parallel bus 127 and the formatter circuit being accessed at any given time are controlled by the microprocessor and the I/O decoder 217. By way of illustrative example, the locations in memory maps associated with each of the formatter circuits can be designated as write-only or read-only, and thus the formatter circuit and address being accessed can implicitly define direction.

More particularly as to the function of the SPRDY signals, the interrupt/wait logic circuit 223 can provide an interrupt pursuant to a SPRDY signal becoming active after a transition of the associated R3CP signal to indicate that data can be transferred on the parallel SPDT bus 127. A wait signal can be provided if the formatter circuits are slower than the controller microprocessor 211, for example pursuant to a SPRDY signal becoming inactive prior to the next transition of the associated R3CP signal. Accordingly, although not shown in FIG. 4, the SPRDY signals could have relatively short negative pulses between the negative pulses at the transitions of the associated R3CP signals. The interrupt/wait logic circuit would be configured to provide the appropriate interrupt or wait signal, for example, as function of the transitions of the R3CP signals.

RFOUT identifies the intervals during which one of the write heads is in contact with the tape, and RFIN identifies the intervals during which one of the read heads is in contact with the tape. In terms of relation to the R3CP signals, RFOUT intervals start with each transition of the R3CP-W signal and continue for 90 degrees of the R3CP-W cycle, while RFIN intervals start 90 degrees after each transition of the R3CP-R signal.

FIG. 4 further illustrates the timing sequence for writing and reading of a given frame. The Main Area data for the frame N is transferred to the write formatter during the first cycle of the R3CP-W signal associated with the frame N. During the second R3CP-W cycle associated with the frame N, Subarea information and Main data block ID information for the frame N are transferred via the SPDT parallel bus. The first track (A) of the frame N is written to tape during first 90 degrees of the third R3CP-W cycle associated with the frame N, and the second track (B) of the frame N is written to tape during the third 90 degrees of the third R3CP-W frame associated with the frame N. Thus, in terms of transferring frame information to the write formatter circuit and writing the frame to tape, three cycles of the R3CP-W signal are utilized, with the frame information being processed in pipeline fashion.

As to reading, the first track (A) of the written frame N is read from tape during the fourth or last 90 degrees of the third R3CP-W associated with the frame N. The second track (B) is read during the second 90 degrees of the fourth cycle of the R3CP-W signal associated with the frame N. The first track Subarea information is available a short time after the start of the fourth R3CP-W cycle associated with the frame N, to allow for processing after reading, and the second track Subarea information is available a short time after the 180 degree transition of the fourth R3CP-W cycle associated with the frame N, also to allow for processing.

In the foregoing read-after-write procedure, a track is read after another adjacent track has been written, in other words by the read head positioned 270 degrees from the write head that wrote such track, in the direction of rotation. In this manner, a recorded track is read in its final form with recorded tracks on either side.

The Main Area data as read for the frame N is transferred to the controller during the last 180 degrees of the fifth cycle of the R3CP-W signal associated with the frame N and the first 180 degrees of the sixth cycle of the R3CP-W signal associated with the frame N.

In terms of the R3CP-R signal, with the first cycle of the R3CP-R signal associated with the frame N being that cycle during which the first track for the frame N is read from tape as identified by RFIN, the Subarea information for the first and second tracks are available during the last half of the first R3CP-R cycle associated with the frame, and during the first half of the second R3CP-R cycle associated with the frame. Main Area data read for the frame N is available during the third cycle of the R3CP-R signal associated with the frame N. In other words, reading a frame from tape and transferring the frame information to the controller takes place over three cycles of the R3CP-R signal, with the frame information being processed in pipeline fashion.

Further as to reading the frame N, FIG. 4 illustrates the availability of certain error data that can be utilized for determining whether re-write is necessary.

A Main Area ID parity error count IDPCNT, a subcode odd parity error count SOPCNT, a subcode even parity error count SEPCNT, and the LOW AMP signal are available for the first track during the second half of the first R3CP-R cycle, and are available for the second track during the first half of the second R3CP-R cycle. The "odd" and "even" terms refer to odd and even numbered blocks. The foregoing counts are accessed via the SPDT parallel bus, while the LOW AMP signal is provided on a separate line.

The C1 ECC processing error count for the Subareas of the first track is available during the first half of the second R3CP-R cycle, while the C1 ECC processing error count for the Subareas of the second track is available during the second half of the second R3CP-R cycle. The C1 ECC processing error count for the Main Area of the first track is available for the first track during the second half of the second R3CP-R cycle, while the C1 ECC processing error count for the Main Area of the second track is available during the first half of the third R3CP-R cycle. The foregoing C1 error counts are accessed by the controller via the SPDT parallel bus.

The controller generates a checksum for the Main Area information, which is checked against checksum information in the Subarea information for the frame N during the fourth cycle of R3CP-R.

In terms of re-write after reading, such re-write can commence as early as the fifth cycle of the R3CP-W signal associated with the frame (i.e., four frames later), or as late as the seventh cycle of the R3CP-W signal (i.e., six frames later), depending upon the nature of the error detected that calls for a re-write.

Further as to the communication of the drive control and status information on the control/status lines 151, control information transmitted to the drive via the RXD signal discussed above can include two categories, drive modes and drive commands, examples of which are set forth further herein. Drive modes generally are directed to drive control operations such as mechanism mode changes that require a relatively longer time to complete, and as to which the controller obtains mode status information to detect that the requested mode is active. Drive commands generally are directed to drive operations that can be completed relatively quickly.

Drive modes and commands can include the following:
DRIVE MODES
   cassette load
   cassette eject
   tape unload, cylinder stop
   cylinder run, tape load
   skip Device Area of tape
   soft stop motion
   hard stop motion
   pause
   forward X1
   forward X3
   forward X5
   forward X7
   forward X11
   forward X12.5
   forward X15
   forward X25
   forward X50
   forward X75
   forward X100
   forward X150
   forward X200
   forward X250
   forward X300
   forward X400
   cylinder stop
   cylinder run
   reverse X1
   reverse X3
   reverse X5
   reverse X7
   reverse X11
   reverse X12.5
   reverse X15
   reverse X25
   reverse X50
   reverse X75
   reverse X100
   reverse X150
   reverse X200
   reverse X250
   reverse X300
   reverse X400
DRIVE COMMANDS
   get drive mode
   clear eject request bit
   set constant speed servo (record)
   set ATF servo (play)
   cassette status LED off
   cassette status LED on
   drive LED off
   drive LED on
   allow media removal
   prevent media removal
   get hole status
   get cassette status
   get error status
   get drive status
   set 13.6 um track width (read/write)
   set 20.4 um track width (read only)
   drive reset, clear errors

An illustrative example of the format of an 8-bit control information byte is set forth in FIG. 5, wherein the type of the control information (drive mode or drive command) is identified by bit 6 or 7 being set to 1. If both bits 6 and 7 are set to 0, the control information is a no-operation.

Status information provided by the drive via the TXD signal discussed above can include information as to status of the drive modes requested by the controller, and also the particular status information requested via drive commands. FIG. 6 sets forth an illustrative example of an 8-bit status information byte that can be utilized to communicate status information. If bit 7 is 1 and bit 6 is 0, the drive is currently changing to the drive mode identified in bits (5:0). If bit 7 is 0 and bit 6 is 1, the drive is in the mode identified by bits (5:0). If both bits 7 and 6 are 1, the drive mode or drive command last sent by the controller has been rejected, and bits (5:0) identify the rejected mode or command.

If both bits 7 and 6 are 0, the status format is as shown in FIG. 7. In particular, bit 5 comprises an Eject Requested bit, while bits (4:0) identify a drive status, cassette status, hole status, or error status codes. The particular status byte can be presented in response to a command, as a result of an error condition, or as a result of operator actuation of a drive Eject button while the drive is operating pursuant to a "prevent media removal" command.

In terms of control/status communications for an implementation wherein control information and status information are communicated only simultaneously pursuant to control by the controller (i.e., full duplex communication wherein drive control is slaved to the controller), a drive status or error code can be returned in response to a drive mode code, with the error code having higher priority. If a drive command is communicated, then the appropriate status code must be returned.

The cassette status, drive status, and error status information can include the following:
CASSETTE STATUS
   no cassette
   cassette loading
   cassette loaded, length unknown
   cassette loaded, length = 120 min.
   cassette loaded, length = 90 min.
   cassette loaded. length = 60 min.
   cassette loaded, length = 45 min.
DRIVE STATUS
   no status available
   Beginning of Tape (BOT) leader detect
   End of Tape (EOT) leader detect
   adjust threshold complete
ERROR STATUS
   no error
   cassette loading error
   cassette eject error
   capstan error
   cylinder error
   reel error or tape jam
   mechanism error
   tape cut
   adjust threshold error
   no cassette
   dew detected, tape, unloaded

As to tape cassette hole status, FIG. 8 sets for a particular example of the format for the code bits of the status byte of FIG. 7. Bit 4 is set to indicate that the tape is write-protected; and bit 3 is set to indicate that the tape is pre-recorded. Bits (2:0) indicate tape type, which can include the following:
TAPE TYPE
metal power or equivalent, 13 um thickness
metal power or equivalent, thin
wide track, 13 um thickness
cleaning cassette
wide track, thin

As to cassette ejection, whether or not cassette ejection is permitted can be controlled by the controller, for example to prevent removal of a cassette while recording. After the "allow media removal" command has been sent to the drive, the drive will eject the cassette immediately after the Eject button is pushed by an operator. This can also be the default mode after reset. If the controller sends a command after the cassette has been ejected, an error status indicating no cassette will be returned by the drive.

After the "prevent media removal" command has been sent to the drive, the drive will set the Eject Requested status bit when the Eject button is actuated, and the cassette will not be ejected. This status remains until the controller issues a "cassette eject" command, a "clear Eject Request" command, or an "allow media removal" command, at which time the cassette will be ejected.

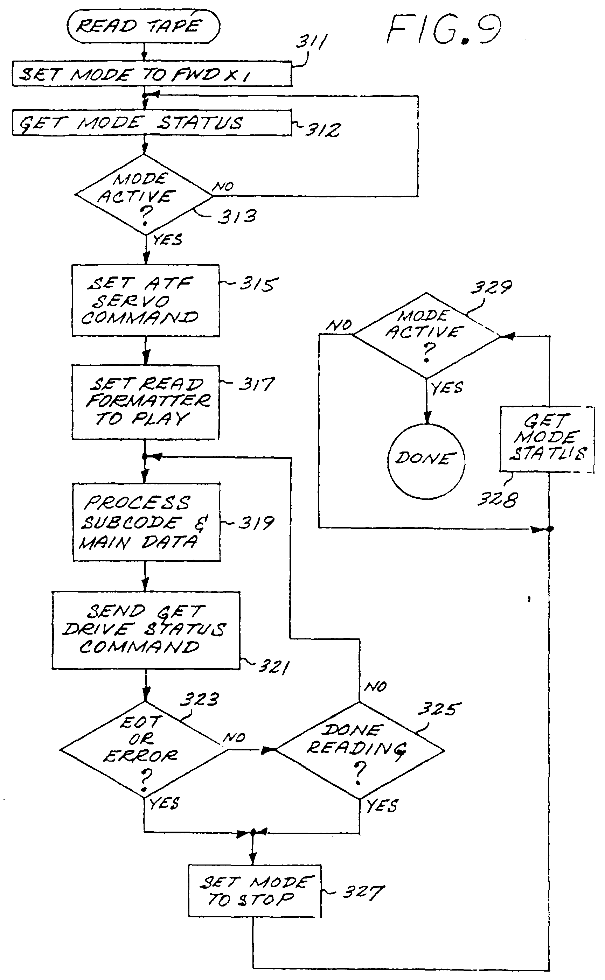

Referring now to FIG. 9, set forth therein by way of illustrative example is a flow diagram of a process that can be implemented with the foregoing drive/controller interface for reading a computer storage DAT tape. At 311 the controller provides a drive mode to the drive via the control/status lines 151 to set the drive mechanism mode to forward at the normal speed of X1. At 312 the controller requests the drive mode status, and at 313 a determination is made as to whether the requested mode is active. If no, control transfers to 312. This is to allow time for the mode change to be completed.

If the determination at 313 is yes, the requested mode of forward X1 is active, a set ATF servo command is provided by the controller at 315. At 317 the read formatter is set to play, for example, pursuant to formatter control data provided by the controller on the SPDT parallel bus.

At 319 the Subarea and Main Area information read from tape are processed as discussed above. As the tape is being read, at 321 the controller periodically requests information as to the drive status, via the control/status lines. At 323 a determination is made as to whether the drive status provided in response to a request at 321 indicates the end of tape or an error. If no, a determination is made at 325 as to whether reading of the selected information, certain specified groups, for example, has been completed. If no, control transfers to 319 for processing Subarea and Main Area information.

If the determination at 323 is yes, or if the determination at 325 is yes, the controller requests the drive to engage the stop mode at 327. At 328 the controller requests the drive mode status, and at 329 a determination is made as to whether the requested mode is active. If no, control transfers to 328. When the stop mode is active, the drive has stopped and the read process is completed.

Other processes for tape operations will be readily apparent to those skilled in the art.

The foregoing has been a disclosure of an interface for use with a computer DAT drive that includes components developed for audio DAT applications, and which advantageously provides for recognition of frame boundaries, phase-locked operation of the drive read and write formatter circuits, read-after-write capability, full format capability as to Sub and Main Areas, and precise tape drive mechanism control.

## Claims

1. A data transfer interface for a digital audio tape DAT system having a write formatter circuit (111) for writing data to tape, a read formatter circuit (117) for reading data from tape, and a drive mechanism control circuit, characterized by:
serial data means (141, 143) for transferring to the write formatter circuit (111) main area information to be written to tape, and for receiving from the read formatter circuit (117) main area information read from tape;
parallel data means (127) for transferring to the write formatter circuit (111) subarea information to be written to tape, and for receiving from the read formatter circuit (117) subarea information read from tape, said parallel data means further providing control information for controlling the operation of the read and write formatter circuit; and
drive control means for transferring drive control information to the drive control circuit for controlling the operation of the drive.

2. The data transfer interface of claim 1 further including host interface means (15) for interfacing the data transfer interface with a host computer.

3. The data transfer interface of claims 1 or 2 wherein the data transferred to the write formatter circuit (111) is organised to resemble audio information.

4. The data transfer interface of claim 3 wherein the data received from the read formatter circuit (117) resembles audio information.

5. The data transfer interface of any preceding claim wherein said parallel data means (127) further accesses error processing information from the read formatter circuit (117).

6. The data interface of any one of any preceding claim wherein said serial data means (141, 143) is capable of transmitting and receiving serial data concurrently.

7. The controller interface of any preceding claim wherein the main area data received from the drive can comprise a read back version of main area data transferred to the write formatter circuit (111), the read back version being received after a predetermined delay relative to the original main data transfer to the write formatter circuit (111).

8. The controller interface of any preceding claim wherein the data written to and read from the tape is in the audio DAT format and wherein said parallel data means (127) transfers to the write formatter circuit (111) further information for the main area data blocks and also transfers to the write and read formatter circuits (111, 117) control information for controlling the operation thereof.

9. The controller interface of claim 8 wherein said main area data transferred to the write formatter circuit (111) emulates the output of an audio analog-to-digital converter, and wherein said main area data from the read formatter circuit (117) emulates the input to an audio digital-to-analog converter.

10. A method for transferring computer data between a computer storage DAT drive controller and a DAT drive having read and write formatter circuits (117, 111) and a drive mechanism, the method comprising:
transmitting to the write formatter circuit (111) for recording in the main areas of the tape a main area serial data stream that emulates the output of an audio analog-to-digital converter;
transmitting to the write formatter circuit (111) for recording in the subareas of the tape a parallel data stream of subarea information;
receiving from the read formatter circuit (117) a serial data stream read from the main areas of the tape and which is configured to be provided to an audio digital-to-analog converter;
receiving from the read formatter circuit (117) a parallel data stream of subarea information read from the subareas of the tape; and
providing control information to the drive to control the mechanical operation thereof.

11. The method of claim 10 wherein the step of transmitting a main area serial data stream and the step of receiving a main area serial data stream are coordinated so that the received serial data stream can comprise the read back version of the transmitted main area serial data stream and is delayed relative thereto by a predetermined interval.

## Patentansprüche

1. Datenübertragungsschnittstelle für ein digitales Tonbandsystem mit einem Schreib-Formatiererkreis (111) zum Schreiben von Daten auf ein Band, einem Lese-Formatiererkreis (117) zum Lesen von Daten von einem Band und mit einem Antriebsmechanismus-Steuerkreis, gekennzeichnet durch:
eine serielle Dateneinrichtung (141, 143) zur Übertragung von auf Band zu schreibenden Hauptbereichsdaten an den Schreib-Formatiererkreis (111) sowie zum Empfangen von von einem Band gelesenen Hauptbereichsdaten von dem Lese-Formatiererkreis (117);
eine parallele Dateneinrichtung (127) zur Übertragung von auf Band zu schreibenden Teilbereichsdaten an den Schreib-Formatiererkreis (111) sowie zum Empfangen von von einem Band gelesenen Teilbereichsdaten von dem Lese-Formatiererkreis (117), wobei die genannte parallele Dateneinrichtung ferner Steuerdaten vorsieht, die zur Steuerung der Funktionsweise der Lese- und Schreib-Formatiererkreise dienen; und
eine Antriebs-Steuereinrichtung zur Übertragung von Antriebs-Steuerungsdaten an den Antriebs-Steuerkreis, um die Funktionsweise des Antriebs zu steuern.

2. Datenübertragungsschnittstelle nach Anspruch 1, ferner mit einer Primär-Schnittstelleneinrichtung (15) zur Verbindung der Datenübertragungsschnittstelle mit einem Verarbeitungsrechner.

3. Datenübertragungsschnittstelle nach Anspruch 1 oder 2, wobei die an den Schreib-Formatiererkreis (111) übertragenen Daten so organisiert werden, daß sie Tondaten darstellen.

4. Datenübertragungsschnittstelle nach Anspruch 3, wobei die von dem Lese-Formatiererkreis (117) empfangenen Daten Tondaten darstellen.

5. Datenübertragungsschnittstelle nach einem der vorstehenden Ansprüche, wobei die genannte parallele Dateneinrichtung (127) ferner auf Fehlerbehandlungsdaten des Lese-Formatiererkreises (117) zugreift.

6. Datenübertragungsschnittstelle nach einem der vorstehenden Ansprüche, wobei die genannte serielle Dateneinrichtung (141, 143) gleichzeitig serielle Daten übertragen und empfangen kann.

7. Steuerteilschnittstelle nach einem der vorstehenden Ansprüche, wobei die von dem Antrieb empfangenen Hauptbereichsdaten eine Wiederholungsversion der an den Schreib-Formatiererkreis (111) übertragenen Hauptbereichsdaten umfassen können, wobei die Wiederholungsversion nach einer vorbestimmten Verzögerung im Verhältnis zu der ursprünglichen Hauptdatenübertragung an den Schreib-Formatiererkreis (111) empfangen wird.

8. Steuerteilschnittstelle nach einem der vorliegenden Ansprüche, wobei die auf das Band geschriebenen und von dem Band gelesenen Daten das digitale Tonbandformat DAT aufweisen, und wobei die genannte parallele Dateneinrichtung (127) weitere Daten in bezug auf die Hauptbereichsdatenblöcke an den Schreib-Formatiererkreis (111) sowie Steuerungsdaten an die Schreib- und Lese-Formatiererkreise (111, 117) zur Steuerung der Funktionsweise der Kreise überträgt.

9. Steuerteilschnittstelle nach Anspruch 8, wobei die genannten an den Schreib-Formatiererkreis (111) übertragenen Hauptbereichsdaten den Ausgang eines Audio-Analog-Digital-Umsetzers emulieren, und wobei die genannten Hauptbereichsdaten des Lese-Formatiererkreises (117) den Eingang eines Audio-Digital-Analog-Umsetzers emulieren.

10. Verfahren zur Übermittlung von Computerdaten zwischen einem Rechnerspeicher-DAT-Antriebssteuerteil und einem DAT-Antrieb mit Lese- und Schreib-Formatiererkreisen (117, 111) und einem Antriebsmechanismus, wobei das Verfahren folgende Schritte umfaßt:
Übertragung eines seriellen Hauptbereichs-Datenstroms, der den Ausgang eines Audio-Analog-Digital-Umsetzers emuliert, an den Schreib-Formatiererkreis (111) zur Aufzeichnung in den Hauptbereichen des Bands;
Übertragung eines parallelen Teilbereichsdaten-Datenstroms an den Schreib-Formatiererkreis (111) zur Aufzeichnung in den Teilbereichen des Bands;
Empfang eines aus den Hauptbereichen des Bands gelesenen seriellen Datenstroms von dem Lese-Formatiererkreis (117), wobei der Datenstrom so konfiguriert ist, daß er einem Audio-Digital-Analog-Umsetzer zugeführt werden kann;
Empfang eines aus den Teilbereichen des Bands gelesenen parallelen Teilbereichsdaten-Datenstroms von dem Lese-Formatiererkreis (117); und
Zuführung von Steuerdaten an den Antrieb zur Steuerung der mechanischen Funktionsweise des Antriebs.

11. Verfahren nach Anspruch 10, wobei der Schritt der Übertragung eines seriellen Datenstroms von Hauptbereichsdaten und der Schritt des Empfangs eines seriellen Datenstroms von Hauptbereichsdaten so koordiniert werden, daß der empfangene serielle Datenstrom die Wiederholungsversion des übertragenen seriellen Datenstroms von Hauptbereichsdaten umfassen kann, und wobei der empfangene Datenstrom im Verhältnis zu diesem Datenstrom um ein vorbestimmtes Intervall verzögert wird.

## Revendications

1. Interface de transfert de données pour un système DAT de bande audio numérique qui possède un circuit (111) de formatage d'écriture servant à écrire des données sur la bande, un circuit (117) de formatage de lecture servant à lire des données sur la bande, et un circuit de commande de mécanisme d'entraînement, caractérisé par :
un moyen de données série (141, 143) servant à transférer au circuit de formatage d'écriture (111) des informations de zones principales devant être écrites sur la bande et à recevoir du circuit de formatage de lecture (117) des informations de zones principales lues sur la bande ;
un moyen de données parallèle (127) servant à transférer au circuit de formatage d'écriture (111) des informations de zones auxiliaires devant être écrites sur la bande et à recevoir du circuit de formatage de lecture (117) des informations de zones auxiliaires lues sur la bande, ledit moyen de données parallèle fournissant en outre des informations de commande servant à commander le fonctionnement des circuits de formatage de lecture et d'écriture ; et
un moyen de commande d'entraînement servant à transférer des informations de commande d'entraînement au circuit de commande de mécanisme d'entraînement afin de commander le fonctionnement du mécanisme d'entraînement.

2. Interface de transfert de données selon la revendication 1, comportant en outre un moyen d'interface central (15) faisant fonction d'interface de l'interface de transfert de données avec un ordinateur central.

3. Interface de transfert de données selon la revendication 1 ou 2, où les données transférées au circuit de formatage d'écriture (111) sont organisées de façon à ressembler à une information audio.

4. Interface de transfert de données selon la revendication 3, où les données reçues de la part du circuit de formatage de lecture (117) ressemblent à une information audio.

5. Interface de transfert de données selon l'une quelconque des revendications précédentes, où ledit moyen de données parallèle (127) fait en outre accès à des informations de traitement d'erreur venant du circuit de formatage de lecture (117).

6. Interface de transfert de données selon l'une quelconque des revendications précédentes, où ledit moyen de données série (141, 143) est en mesure de transmettre et de recevoir concuremment des données série.

7. Interface de dispositif de commande selon l'une quelconque des revendications précédentes, où les données de zones principales reçues de la part du mécanisme d'entraînement peuvent comprendre une version lue en retour des données de zones principales transférées au circuit de formatage d'écriture (111), la version lue en retour étant reçue au terme d'un retard prédéterminé par rapport au transfert des données principales initiales au circuit de formatage d'écriture (111).

8. Interface de dispositif de commande selon l'une quelconque des revendications précédentes, où les données écrites et lues sur la bande sont dans le format DAT audio, et où ledit moyen de données parallèle (127) transfère au circuit de formatage d'écriture (111) plus d'informations pour les blocs des données de zones principales et transfère également aux circuits de formatage d'écriture et de lecture (111, 117) des informations de commande servant à commander leur fonctionnement.

9. Interface de dispositif de commande selon la revendication 8, où lesdites données de zones principales transférées au circuit de formatage d'écriture (111) émulent le signal de sortie d'un convertisseur analogique-numérique audio, et où lesdites données de zones principales venant du circuit de formatage de lecture (117) émulent le signal d'entrée d'un convertisseur numérique-analogique audio.

10. Procédé permettant de transférer des données d'ordinateur entre un dispositif de commande d'appareil d'entraînement DAT de mémorisation d'ordinateur et un appareil d'entraînement DAT qui possède des circuits de formatage de lecture et d'écriture (117, 111) ainsi qu'un mécanisme d'entraînement, le procédé comprenant les opérations suivantes :
transmettre au circuit de formatage d'écriture (111), pour l'enregistrement dans les zones principales de la bande, un train de données série de zones principales qui émule le signal de sortie d'un convertisseur analogique-numérique audio ;
transmettre au circuit de formatage d'écriture (111), pour l'enregistrement dans les zones auxiliaires de la bande, un train de données parallèle d'informations de zones auxiliaires ;
recevoir du circuit de formatage de lecture (117) un train de données série lu dans les zones principales de la bande et qui est configuré pour être fourni un convertisseur numérique-analogique audio ;
recevoir du circuit de formatage de lecture (117) un train de données parallèle d'informations de zones auxiliaires lu dans les zones auxiliaires de la bande;
fournir des informations de commande au mécanisme d'entraînement afin de commander le fonctionnement mécanique de celui-ci.

11. Procédé selon la revendication 10, où l'opération consistant à transmettre un train de données série de zones principales et l'opération consistant à recevoir un train de données série de zones principales sont coordonnées de façon que le train de données série reçu puisse comprendre la version lue en retour du train de données série de zones principales transmis et soit retardé par rapport à celui-ci d'un intervalle prédéterminé.
